# EUROPEAN PATENT APPLICATION

(11) **EP 2 426 919 A2**
(43) Date of publication of application: **07.03.2012**
(21) Application number: 11004028.4
(22) Date of filing: 04.10.2005
(51) Int. Cl.: H04N 7/12, H04N 7/18, H04B 1/66

(54) **Video monitoring system**

(30) Priority: 04.10.2004 US 615613 P
(62) Divisional of application: 05802701.2
(71) Applicant: CINE-TAL SYSTEMS, INC., Indianapolis, IN 46250 (US)
(72) Inventor: Carroll, Robert C., Fishers, Indiana 46038 (US)
(74) Representative: Kenrick, Mark Lloyd

(57) **Abstract**

A video monitor comprising a display screen having display screen dimensions defined by a pixel width and a pixel height, a processor electrically coupled with the display screen, and a memory device electrically coupled with the processor. The memory device has stored therein a plurality of instructions, which when executed by the processor, cause the processor to display a video image received from a video source on the display screen according to a display format, the display format having predefined display format dimensions defined by a predefined video image pixel width and a predefined video image pixel height, the predefined display format dimensions being less than the predefined display screen dimensions, and display a menu of choices on the display screen, the menu being displayed in a location such that the menu does not obstruct any portion of the video image.

## Description

This patent application claims priority to and the benefit of U.S. Provisional Patent Application Serial No. 60/615,613 entitled "Intelligent Monitor-Server" which was filed on October 4, 2004, the entirety of which is expressly incorporated herein by reference.

### TECHNICAL FIELD

The present disclosure relates generally to video display devices, and more particularly, to video monitoring systems for displaying video received from a video source.

### BACKGROUND

Video monitors are display devices used to view video images received from video cameras coupled with the video monitors. Video monitors are commonly used in cinematic productions for viewing video images during production. For example, a video monitor may be used in a cinematic production to view the resulting video image of a set or scene. However, typical video monitors are simple display devices that display the raw video image as it was received from the video camera. Accordingly, the video image may be in a compressed state when displayed and/or not representative of the desired final appearance of the video image due to environmental conditions during the time of filming and/or other factors which may alter the actual video image from the desired appearance. Therefore, the recorded video image is typically corrected or modified at a later time, for example, during post production, to arrive at the desired final appearance of the video image.

### SUMMARY

The present invention comprises one or more of the features recited in the appended claims and/or the following features which, alone or in any combination, may comprise patentable subject matter:
According to one aspect, a method of operating a video monitor is provided. The method may include receiving a video image, such as a high definition video image, from a video camera. In some embodiments, the video image may be a Society of Motion Pictures and Television Engineers (SMPTE) standard video image.
The method may also include decompressing the video image. For example, the method may include decompressing a logarithmically compressed video image to a linear video image. The method may also include modifying a video parameter of the video image. For example, the method may include modifying the color space of the video image. The video image may be displayed based on the video parameter on a display device. The video image may be displayed according to a predetermined display format having a predefined pixel width and pixel height The method may also include retrieving an authorization code from a remote computer. The method may include allowing access to a function of the video monitor based on the authorization code and/or recording an amount of time in which the video monitor is used based on the authorization code. The method may further include transmitting the video image to a remote video device such as a video recording device and/or a second video monitor. The video image may be transmitted over a network such as, for example, a publicly-accessible global network. The method may yet further include retrieving a predefined video parameter value and modifying the video parameter of the video image based on the predefined video parameter value. The predefined video parameter value may be retrieved via a network and may, in some embodiments, be based on a predefined display standard. The method may also include determining a color range of a portion of the video image and displaying indicia of the color range to a user of the video monitor. Additionally, the method may include transmitting control data to the video camera based on the video image. The method may also include determining an error condition of the video image and providing an alert based on the error condition. For example, the error condition may be determined based on compliance of the video image with a predefined display format or standard. The method may further include determining video image data based on the video image and incorporating the video parameter into the video image data. The method may also include storing the video image data. The method may yet further include displaying a menu of choices on the display device in a location such that the menu does not obstruct any portion of the video image.
According to another aspect, a video monitoring system is provided. The video monitoring system may include a display device and a processor electrically coupled with the display device. The system may also include a memory device electrically coupled with the processor. The memory device may have stored therein a plurality of instructions, which when executed by the processor, cause the processor to decompress a video image, such as a high definition video image, received from a video camera. For example, the processor may decompress a logarithmically compressed video image to a linear video image. In some embodiments, the video image may be a Society of Motion Pictures and Television Engineers (SMPTE) standard video image. The plurality of instructions may further cause the processor to modify a video parameter of the video image. The plurality of instructions may also cause the processor to display the video image based on the video parameter on the display device. The video image may be displayed according to a predetermined display format or standard having a predefined pixel width and pixel height The plurality of instructions may further cause the processor to retrieve an authorization code from a remote computer. The processor may allow access to a function or feature of the video monitoring system based on the authorization code and/or record an amount of time in which the video monitoring system is used based on the authorization code. The plurality of instructions may also cause the processor to transmit the video image to a remote video device such as a video recording device and/or a video display device capable of displaying the video image. In some embodiments, the video image may be transmitted over a network. The plurality of instructions may further cause the processor to retrieve a predefined video parameter value. The processor may modify the video parameter of the video image based on the predefined video parameter value. The plurality of instructions may also cause the processor to determine a color range of a portion of the image and display indicia of the color range on the display device. The plurality of instructions may yet further cause the processor to transmit control data to the video camera based on the video image. The plurality of instructions may also cause the processor to determine an error condition of the video image and provide an alert based on the error condition. The error condition may be determined based on, for example, the compliance of the video image with a predefined display standard. The plurality of instructions may also cause the processor to determine video image data based on the video image and incorporate the video parameter into the video image data. The processor may subsequently store the video image data. The plurality of instructions may yet further cause the processor to display a menu of choices on the display device in a location such that the menu does not obstruct any portion of the video image.
According to a yet another aspect, a video monitor is provided. The video monitor may include a display screen having a pixel width and a pixel height. The video monitor may also include a processor electrically coupled with the display screen. The video monitor may further include a memory device electrically coupled with the processor. The memory device may have stored therein a plurality of instructions, which when executed by the processor, cause the processor to display a video image received from a video camera on the display screen according to a display format. The display format may have associated therewith a predefined video image pixel width and a predefined video image pixel height The predefined video image pixel height of the display format may be less than the pixel height of the display screen. The plurality of instructions may further cause the processor to display a menu of choices on the display screen in a location such that the menu does not obstruct any portion of the video image.
According to a further aspect, a method of recording a video image is provided. The method may include displaying the video image according to a predetermined display format The method may also include determining a video parameter of the video image. The method may further include determining video image data indicative of the video image. The method may yet further include incorporating the video parameter into the video image data. The method may also include storing the video image data. In some embodiments, the video parameter may be associated with a predetermined output medium.

The above and other features of the present disclosure, which alone or in any combination may comprise patentable subject matter, will become apparent from the following description and the attached drawings.

### BRIEF DESCRIPTION OF THE DRAWINGS

The detailed description particularly refers to the following figures, in which:

FIG. 1 illustrates a simplified block diagram of a video monitoring system;

FIG. 2 illustrates a simplified block diagram of a video monitor of the video monitoring system of FIG. 1;

FIG. 3 illustrates a simplified block diagram of an exemplary video processing circuit of the video monitor of the FIG. 2;

FIG. 4a-b illustrates a simplified flow diagram of an algorithm for use with the video monitoring system of FIG. 1;

FIG. 5 illustrates a screenshot of an exemplary image that may be displayed on the display device of the video monitor of FIG. 2 during execution of the algorithm of FIG. 4; and

FIG. 6 illustrates a screenshot of another exemplary image that may be displayed on the display device of the video monitor of FIG. 2 during the execution of the algorithm of FIG. 4.

### DETAILED DESCRIPTION OF THE DRAWINGS

While the concepts of the present disclosure are susceptible to various modifications and alternative forms, specific exemplary embodiments thereof have been shown by way of example in the drawings and will herein be described in detail. It should be understood, however, that there is no intent to limit the concepts of the present disclosure to the particular forms disclosed, but on the contrary, the intention is to cover all modifications, equivalents, and alternatives falling within the spirit and scope of the disclosure.

In the detailed descriptions that follow, several integrated circuits (hereinafter sometimes ICs) and other components are identified, with particular component values, circuit types and sources. In some cases, terminal names and pin numbers for specifically identified circuit types and sources may be noted. This should not be interpreted to mean that the identified component values and circuits are the only component values and circuits available from the same, or any, sources that will perform the described functions. Other components and circuits are typically available from the same, and other, sources which will perform the described functions. The terminal names and pin numbers of such other circuits may or may not be the same as those indicated for the specific circuits identified in this application.

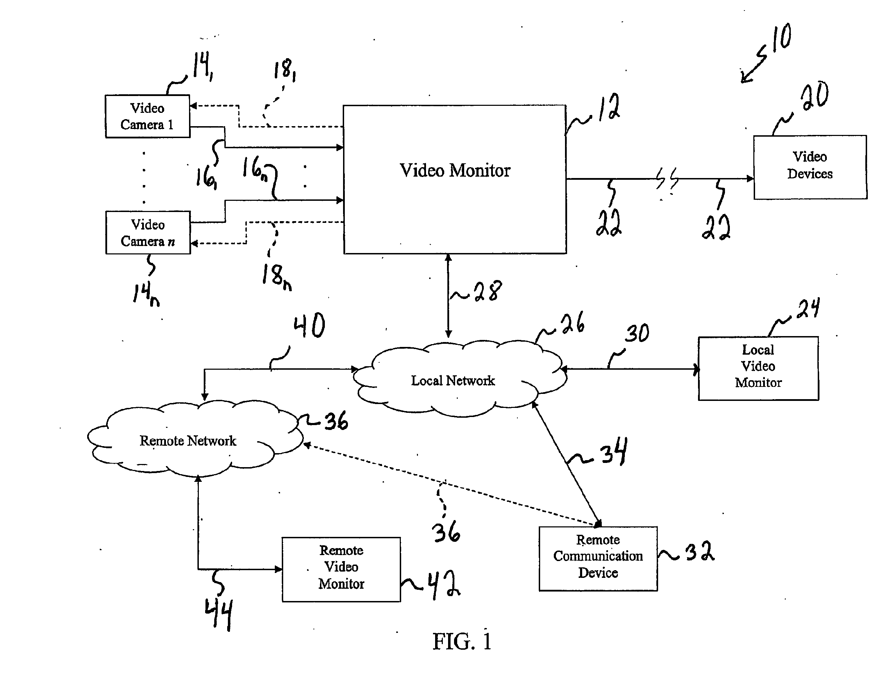

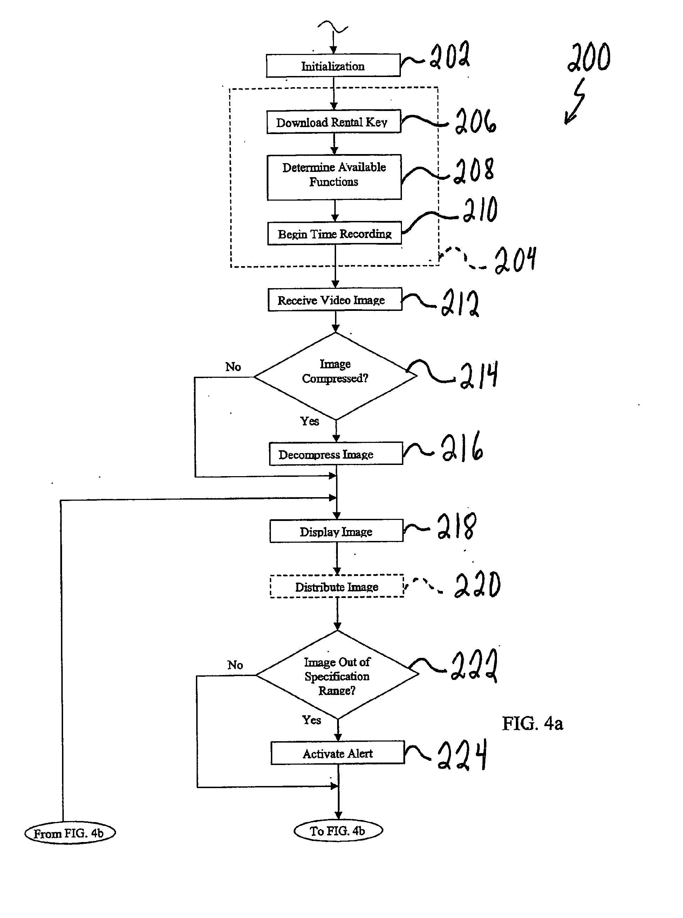

Referring now to FIG. 1, a video monitoring system 10 includes a video monitor 12. The video monitor 12 is communicatively coupled with one or more video sources and receives (a) video image(s) from the video source(s). The video source may be embodied as any device capable of providing a video image such as, for example, a video camera, a video tape recorder, a video disc recorder, or other type of video processing device or system. In the illustrative embodiment of FIG. 1, the video monitoring system 10 includes a number of video cameras 14₁-14ₙ coupled with the video monitor 12 via a number of communication links 16₁-16ₙ, respectively. The video cameras 14₁-14ₙ may be embodied as any type of video cameras capable of generating a video image and transmitting the video image to the video monitor 12. In one embodiment, the video cameras 14₁-14ₙ are high definition video cameras that generate high definition video images. The video images may be any type of video image and may comply with any display format or standard. For example, in one embodiment, the video images are Society of Motion Pictures and Television Engineers (SMPTE) standard video images. In particular, the video images may be SMPTE 292M standard video images or SMPTE 372M standard video images. Additionally, in some embodiments, the video images may be compressed based on any suitable compression technique. For example, in some embodiments, the cameras 14₁-14ₙ are configured to compress the video images prior to transmitting the video images to the video monitor 12 via the communication links 16₁-16ₙ. In one particular embodiment, the cameras 14₁-14ₙ transmit logarithmically compressed video images to the video monitor 12. As such, the video monitor 12 is configured to decompress the video images prior to displaying the video images to (a) user(s) of the video monitor 12, as discussed in more detail below in regard to FIG. 4a-b. The communication links 16₁-16ₙ may be embodied as any type of communication links capable of facilitating the transmission of the video images from the video cameras 14₁-14ₙ to the video monitor 12 such as, for example, cables, wires, fiber optic cables, and the like.

In some embodiments, the video monitor 12 may also be communicatively coupled with any subset of the video cameras 14₁-14ₙ via a number of control communication links 18₁-18ₙ, respectively. The control communication links 18₁-18ₙ may be embodied as any type of communication links capable of facilitating the transmission of control data from the video monitor 12 to the video cameras 14₁-14ₙ such as, for example, cables, wires, fiber optic cables, and the like. As such, the video monitor 12 may be configured to control the operation and/or functions of the video cameras 14₁-14ₙ, via the control communication links 18₁-18ₙ. That is, the video monitor 12 may be configured to transmit control data to the vide cameras 14₁-14ₙ via the control communication links 18₁-18ₙ to control functions of the video cameras 14₁-14ₙ. For example, the video monitor 12 may transmit control data to any one or more of the cameras 14₁-14ₙ to adjust or modify the camera response curve of the one or more cameras 14₁-14ₙ.

The video monitor 12 is also communicatively coupled with one or more video devices 20 via one or more communication links 22. The video devices 20 may be any types of video devices capable of receiving video images. For example, the remote video devices may include video recording devices configured to digitally record the video image(s) received from the video monitor 12, video display devices configured to display the video image, video projectors, or the like. The communication links 22 may be embodied as any number and types of communication links capable of facilitating the transmission of the video image(s) from the video monitor 12 to the video devices 20 such as, for examples, cables, wires, fiber optic cables, and the like. The video image may be transmitted to the video devices 20 via the communication links 22 using any transmission protocol or standard. In one particular embodiment, the video controller 12 is configured to transmit the video image to one or more of the video devices 20 using the Digital Visual Interface (DVI) standard developed by the Digital Display Work Group (DDWG). In such an embodiment, the communication link 22 is a DVI communication link, such as a DVI cable, capable of facilitating DVI transmission of the video image(s). However, in other embodiments, other transmission protocols/standards may be used. For example, in some embodiments, the video monitor 12 may transmit the video image(s) to the video devices 20 using such transmission protocols as USB, TCP/IP, Bluetooth, ZigBee, Wi-FI, Wireless USB, and/or the like.

The video devices 20 may be positioned near or remotely from the video monitor 12. For example, in some applications such as cinematic production applications, the video monitor 12 may be located on a set of a production facility while one or more of the video devices 20 are located at another location, such as the special effects department, of the production facility. Alternatively, one or more of the video devices 20, such as a video recording device, may be located on the same set of the production facility as the video monitor 20 and, as such, located next to or near the video monitor 12. Regardless, it should be appreciated that the video monitoring system 10 enables remote viewing of the video image(s) displayed on the video monitor 12 via one or more of the video devices 20. The video images displayed or recorded on the video devices 20 are identical to the video images displayed on the video monitor 12. That is, as described below in regard to FIGS. 4a-b, any modification to the video images performed on the video monitor 12 are also transmitted to and displayed/recorded on the video devices 20. Additionally, it should be understood that although only one video image device 20 and one communication link 22 are illustrated in FIG. 1, the video monitoring system 10 may include any number of video devices 20 and associated communication links 22 coupled with the video monitor 12.

The video monitor 12 is also configured to communicate with a local video monitor 24 via a local network 26. The video monitor 12 may be configured to transmit the video image(s) to the local video monitor 24 and/or retrieve data from the local video monitor 24 such as video parameter values or the like. To do so, the video monitor 12 is communicatively coupled to the local network 26 via a communication link 28. The local video monitor 24 is also communicatively coupled to the local network 26 via a communication link 30. The network 26 may be embodied as any type of network such as a local area network (LAN) and may be, for example, a wired and/or wireless network. As such, the communication links 28, 30 may be embodied as any type of communication links capable of facilitating transmission of the video image(s) and other data between the video monitor 12 and the local video monitor 24. The communication links may be wired or wireless and may use any communication protocol suitable for transmitting the video image(s). For example, in embodiments wherein the local network 26 is a wired local network, the video monitor 12 may be configured to transmit the video image(s) to the local video monitor 24 using the Institute of Electrical & Electronic Engineers (IEEE) 802.3 standard or the like. Alternatively, in embodiments wherein the local network 26 is a wireless network, the video monitor 12 may be configured to transmit the video image(s) to the local video monitor 24 using the IEEE 802.11 g standard or the like.

The local video monitor 24 is similar to the video monitor 12. The local video monitor 24 is typically located in the same production facility or general location as the video monitor 12 depending on the type and functionality of the local network 26. However, the local video monitor 24 may be positioned in a location away from the video monitor 12. For example, in cinematic production applications, the video monitor 12 will typically be located with the cameras 14₁-14ₙ on a production set of a cinematic production facility. In such applications, the local video monitor 24 may be located in a post-production department, which may be housed in a different room or building away from the production set. In such applications, the video monitor 12 may be configured to distribute or transmit the video image(s) received from the video cameras 14₁-14ₙ from the production set to the local video monitor 24 located in, for example, the animation department via the local network 26.

The video monitor 12 is also configured to communicate with a remote communication device 32 via the local network 26. The video monitor 12 may be configured to distribute or transmit the video image(s) to the remote communication device 32 and/or retrieve data from the device 32. To do so, the remote communication device is configured to communicate with the local network 26 via a communication link 34. The communication link 34 may be similar to the communication links 28, 30 and may be a wired or wireless communication link. As such, any suitable communication protocol including, but not limited to, the IEEE 802.3 standard and/or IEEE 802.11g standard, may be used The remote communication device 32 may be any device capable of communicating with the video monitor 12 over the network 26. For example, the remote communication device 32 may be embodied as a communication device having a web browser or other software and/or hardware communication means included therewith. In some embodiments, the remote communication device may be configured to display the video image received from the video monitor 12. In such embodiments, the device 32 includes a display screen capable of displaying the video image in an uncompressed and/or compressed form such as a dimensionally-reduced video image form. The remote communication device 32 may also be configured to transmit data to the video monitor 12 via the local network 26. For example, the remote communication device 32 may be used to communicate or transmit video parameters or other image data to the video monitor 12. In some embodiments, the remote communication device is embodied as a portable communication device. For example, the remote communication device 32 may be embodied as a laptop personal computer, a personal digital assistant, network-enabled cellular phone, or the like.

In some embodiments, the remote communication device 32 may alternatively or additionally communicate with the video monitor 12 via a remote network 36. To do so, the remote communication device 32 is communicatively coupled to the remote network 36 via a communication link 38, whereas the remote network 36 is communicatively coupled to the local network 26 via a communication link 40. The remote network 36 may be embodied as any type of remote network such as a wide area network (WAN) or a publicly-accessible global network (e.g., the Internet). Additionally, the remote network 36 may be a wired and/or wireless network. As such, the communication links 36 and/or 40 may be wired and/or wireless communication links. The remote communication device 32 may communicate with the video monitor 12 using any suitable wired or wireless communication protocol such as, for example the IEEE 802.3 standard and/or the IEEE 802.11 g standard. The remote communication device 32 may perform all the functions described herein such as displaying the video image(s) received from the monitor 12 and/or transmitting data to the monitor 12 via the remote network 36 (and the local network 26).

The video monitor 12 is also configured to communicate with a remote video monitor 42 via the remote network 36 and the local network 26. The video monitor 12 may be configured to transmit the video image(s) to the remote video monitor 42 and/or retrieve data from the remote video monitor 42 such as video parameter values or the like. To do so, the local video monitor 42 is communicatively coupled to the remote network 36 via a communication link 44. The communication link 44 may be embodied as any type of communication links capable of facilitating transmission of the video image(s) and other data between the video monitor 12 and the remote video monitor 42. The communication link 44 may be wired or wireless and may use any communication protocol suitable for transmitting the video image(s) such as the IEEE 802.3 standard and/or the IEEE 802.11g standard.

The remote video monitor 42 is similar to the video monitor 12 and the local video monitor 24. However, the remote video monitor 42 may be positioned in a location away from the production facility or general location of the video monitor 12. For example, in cinematic production applications, the remote video monitor 24 may be located in a post-production or other department housed off-site of the production facility. For example, the post-production or other department may be located in another area of the city than the video monitor 12. Additionally, in embodiments wherein the remote network 36 includes the Internet, the remote video monitor 24 may be located in a different state or country than the state wherein the video monitor 12 is located.

It should be appreciated that the video monitoring system 10 may include other devices not illustrated in FIG. 1 to facilitate the communication between the video monitor 12 and the video devices 20, the local video monitor 24, the remote communication device 32, and/or the remote video monitor 42. For example, the system 10 may include one or more intervening modems (not shown), data routers (not shown), and/or internet service providers ("ISPs'') (not shown) to transfer the data (e.g., video image, video parameter values, etc.) between the video monitor 12 and one or more of the video devices 20, the local video monitor 24, the remote communication device 32, and/or the remote video monitor 42.

In use, the video monitoring system 10 may be used to view, analyze, modify, and distribute (a) video image(s). As discussed above, the video monitor 12 of the system 10 is configured to receive the video images from one or more of the video cameras 14. The video images are displayed to a user of the video monitor 12 according to (a) predetermined display format(s). The display format(s) define(s) how the video images are to be displayed and may include such specifications as the number of pixels of the width and height of the video images, how the video images are compressed/expanded, threshold values such as acceptable color ranges, luminance levels, and gamma levels, and/or the like. The display format(s) may also correlate to the type(s) of output medium (media), for example, the type of filmstock or the type of display device such as a cathode ray tube (CRT), liquid crystal display (LCD), plasma, digital light processing (DLP), or otherwise, that will be used to display the video image(s) to the targeted audience. For example, if the video image(s) is (are) intended to be viewed via (a) LCD display device(s), a display format for LCD display devices may be used to display the video image(s) on the video monitor 12. In this way, the user of the video monitor 12 can view the video image(a) as it (they) will be viewed as it will be displayed using the targeted output medium. Because the user of the video monitor 12 is viewing the video image(s) as the target audience will view the video image(s), the user of the video monitor 12 may subjectively analyze the video image(s). Based on this subjective analysis, the user may modify the video image(s) by, for example, moving or relocating one or more of the video cameras 14₁-14ₙ, changing the backdrop of the scene imaged in the video image(s), modify the ambient lighting of the scene, and so on. Additionally, the user the video monitor 12 may perform a quantitative analysis of the video image. To do so, the video monitor 12 may be used to display the video parameters of the video image(s) and modify such video parameter to modify the displayed video image(s). The video parameters include any data usable by a display device to display the video image(s). For example, the video parameters may include such data as color mapping data of the video image(s), luminance levels of the video image, the gamma levels of the video image, data values of the individual pixels of the video image, ancillary data (ANC) pack errors, cyclic redundancy check (CRC) errors, vertical interval time code, longitudinal time code, metadata, embedded audio data, and so on. Accordingly, the user of the video monitor 12 may view selected video parameters of the video image(s), modify the parameters, and view the video image(s) as displayed using the modified video parameters.

The video monitor 12 may also be used to distribute or transmit the video image(s) and/or the video parameters of the video image(s) to the video devices 20, the local video monitor 24, the remote communication device 32, and/or the remote video monitor 42. This way, other personnel such as, for example, animators, colorists, and the like, are able to view the video image(s) as modified by the user of the video monitor 12. In addition, the other personnel may use the video devices 20, the local video monitor 24, the remote communication device 32, and/or the remote video monitor 42 to transmit or otherwise provide additional or alternative video parameters to the video monitor 12. In response, the video monitor 12 is configured to display the video image(s) using the retrieved video parameters. For example, a colorist may develop a color range based on a three-dimensional color cube (i.e., RGB, YPrPb) and transmit this video parameter to the video monitor 12. In this way, the user of the video monitor 12 is able to view the video image(s) as modified by the other personnel. Accordingly, the user of the video monitor 12 and the other personnel may collaborate in real-time (e.g., via a telephone, cellular phone, e-mail, or other communication means) to develop (a) video image(s) that is (are) acceptable to the user and the other personnel. Such collaboration may reduce the post-production workload of the video image(s).

Once the video parameters have been determined and modified such that the resulting video image(s) when displayed using the video parameters is (are) as desired, the video image(s) may be stored on a video recording device using a standardized video image output or transmission format. For example, in one embodiment, the video image(s) is (are) stored using the SMPTE 292M and/or SMPTE 372M standard format(s). Such standardized video image formats typically include predefined ancillary data locations in addition to the video image data that define the video image(s). The ancillary data locations do not affect the video image when displayed and may be used to store ancillary data such as the frame time and length, the author of the video image(s), and/or the like. The video monitor 12 may be used to store subsets of the video parameters in such ancillary data locations. As such, the video parameters may be incorporated into the video image data that define the video image(s). In this way, the display device(s) used to display the video image(s) (i.e., the final video) may be configured to extract or otherwise read the video parameters stored in the ancillary data locations and display the video image(s) using the video parameters such that the displayed video image(s) has (have) the appearance desired by the user of the video monitor 12.

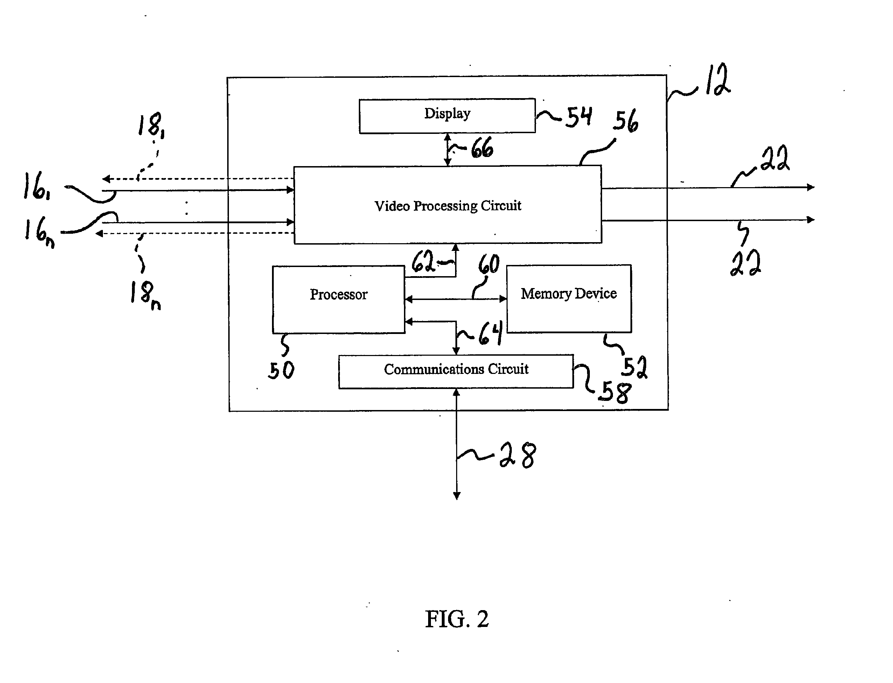

Referring now to FIG. 2, in one illustrative embodiment, the video monitor 12 includes a processor 50, a memory device 52, a display device 54, a video processing circuit 56, and a communications circuit 58. The processor 50 is coupled with the memory device 52 via a number of signal paths 60. The processor 50 may be embodied as any type of processor including, for example, discrete processing circuitry (e.g., a collection of logic devices), general purpose integrated circuit(s), and/or application specific integrated circuit(s) (ASICs). The memory device 52 may be embodied as any type of memory device and may include one or more memory types, such as, random access memory (i.e., RAM) and/or read-only memory (i.e., ROM). The processor 50 is also coupled with the video processing circuit 56 via a number of signal paths 62. The video processing circuit 56 may be embodied as any circuit or collection of circuits configured to receive (a) video image(s) from one or more of the video cameras 14₁-14ₙ, determine and/or modify video parameters of the video image(s), distribute or transmit the video image(s) to (an)other video device(s), and perform the other functions described herein. The video processing circuit 56 may include any number of processors, memory devices, drivers, and other electrical devices and circuits. In some embodiments, the video processing circuit 56 may form a portion of the processor 50. Alternatively, in other embodiments, the video processing circuit 56 may be embodied as a Peripheral Component Interconnect (PCI) video card configured to be received by a PCI slot of a standard computer motherboard.

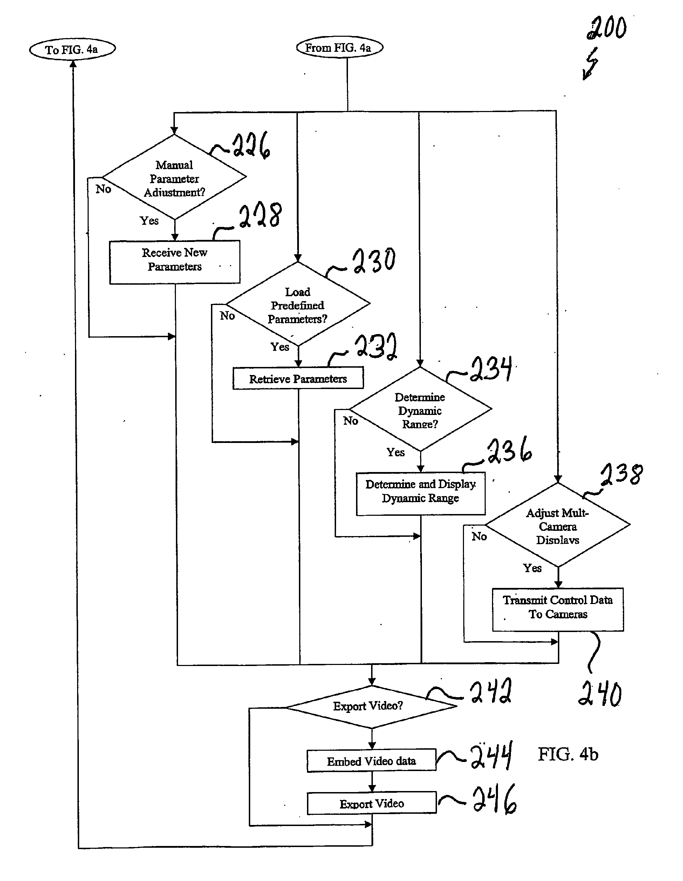

The video processing circuit 56 is coupled with the display device 54 via a number of signal paths 66. The display device 54 may be any type capable of displaying the video image(s) in an uncompressed form and according to the desired display format. The display device 54 may use any type of display technology. That is, the display device 54 may be embodied as, for example, a LCD, a CRT, a plasma screen, or the like. The display device 54 has a total viewing area greater than the area(s) of the video image(s) as defined by the display format such that an unused area of the display screen exists while the video image(s) is (are) displayed thereon. In some embodiments, as described below in regard to FIGS. 4a and 4b, this unused area of the display screen is used to display a menu for selection of choices by the user of the video monitor 12 such that the menu does not cover or obstruct any portion(s) of the video image(s). In one particular embodiment, the display device 54 is embodied as a high definition display screen having a pixel width of 1920 pixels and a pixel height of 1200 pixels.

The processor 50 is also coupled with the communications circuit 58 via a number of signal paths 64. The communications circuit 58 may be embodied as any circuit capable of transmitting the video image from the video monitor 12 to the local video monitor 24, the remote communication device 32, and/or the remote video monitor 42 and/or retrieving data therefrom. Depending on the type of the local network 26, the communications circuit 58 may be embodied as a wireless or wired communications circuit and configured to transmit and/or receive data such as the video image using any suitable communication protocol as described above in regard to FIG. 1. The communications circuit 58 may include any number of sub-circuits, electrical devices, and the like.

The signal paths 60, 62, 64, 66 may be any type of signal paths capable of facilitating the transmission of data between the relevant devices of the video monitor 12. For example, the signal paths 60, 62, 64, 66 may be embodied as any number of wires, cables, printed circuit board traces, vias, or the like. Additionally, it should be appreciated that any one or more of the signal paths 60, 62, 64, 66 may be embodied in a single signal path such as one or more buses. For example, in some embodiments, the signal paths 62, 60, and 64 are embodied as an address and data bus. In addition, the video monitor 12 may include other electrical devices and circuitry typically found in a computer for performing the functions describe herein such as, for example, a hard drive, input/output circuitry, and the like.

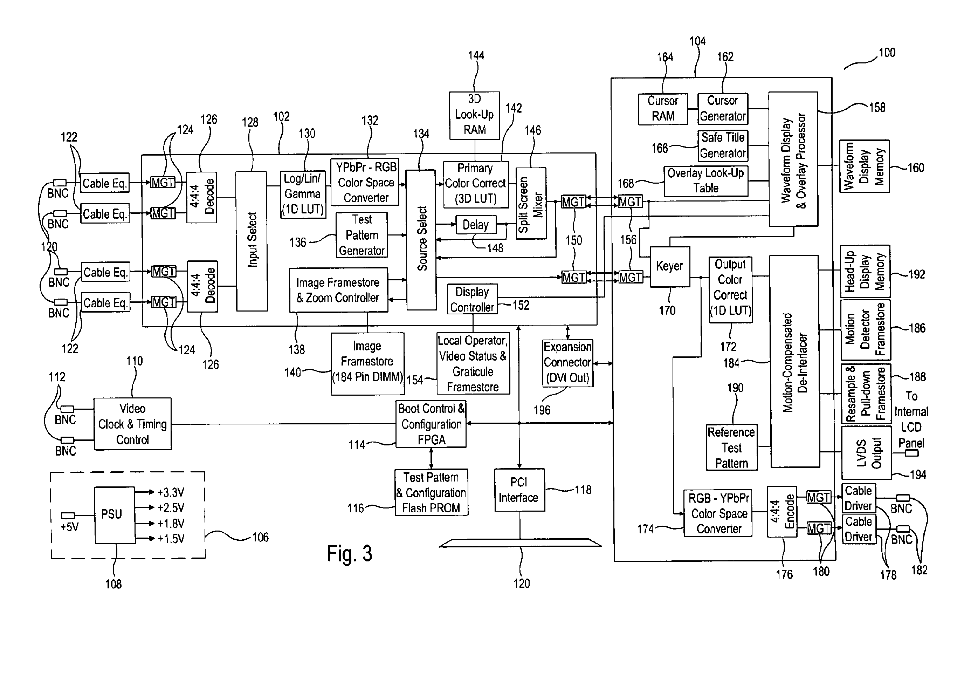

Referring now to FIG. 3, an illustrative video processing circuit 100 includes an input processing circuit 102, an output processing circuit 104, and a power supply circuit 106. The power supply circuit 106 provides power to the individual circuits, such as processing circuits 102, 104, and other devices of the video processing circuit 100. The power supply circuit 106 includes a power supply unit 108. The power supply unit 108 receives an input of 5 volts and produces a number of power signals having different voltage levels. In one particular embodiment, the power supply unit 108 is embodied as a TPS54616PWP 3-V To 6V Input, 6-A Output Synchronous Buck PWM Switcher With Integrated FETs, which is commercially available from Texas Instruments Incorporated of Dallas, Texas; a TPS54316PWP 3-V To 6V Input, 3-A Output Synchronous-Buck PWM Switcher With Integrated FETs, which is also commercially available from Texas Instruments Incorporated, a TPS40021PWP Enhanced, Low-Input Voltage-mode Synchronous Buck Controller, which is also commercially available from Texas Instruments Incorporated, an LP3962EMP1.8 1.5A Fast Ultra Low Dropout Linear Regulator, which is commercially available from National Semiconductor of Santa Clara, California; and a 74AC04 Hex Inverter, which is commercially available from Fairchild Semiconductor of South Portland, Maine.

The video processing circuit 100 also includes a video clock and timing control circuit 110. The video clock and timing control circuit 110 provides a clock signal for the processing circuit 102, 104 and other circuits of the video processing circuit 100. In addition, an external analog sync source may be coupled with the video clock and timing control circuit 110 via a pair of Bayonet-Neill-Concelman (BNC) connectors 112. In one particular embodiment, the video clock and timing control circuit 110 is embodied as an OPA343NA Single-Supply, Rail-To-Rail Operational Amplifier, which is commercially available from Burr-Brown Corporation of Tucson, Arizona; an ICS525R-02I OSCaR™ User Configurable Clock, which is commercially available from Integrated Circuit Systems, Inc. of San Jose, California; an EL4511CU Super Sync Separator, which is commercially available from Intersil Corporation of Milpitas, California; three GL576 Voltage Controlled Cyrstal Oscillators, which are commercially available from Euroquartz Limited of Crewkerne, Somerset, United Kingdom; an X091 Oscillator, which is also commercially available from Euroquartz Limited; an FSA1156P6 Low Ron Low Voltage SPST Analog Switch, which is commercially available from Fairchild Semiconductor of South Portland, Maine; four NC7SZ126 TinyLogic^{®} UHS Buffers with 3-State Outputs, which are also commercially available from Fairchild Semiconductor; and three IDT5V2305PGI 2.5V To 3.5V High Performance Clock Buffers, which are commercially available from Integrated Device Technology, Incorporated of San Jose, California.

The video clock and timing control circuit 110 is coupled with a boot control and configuration field programmable gate array (FPGA) 114. The boot control and configuration FPGA 114 controls the start-up sequence of the video processing circuit 100. In one particular embodiment, the boot control and configuration FPGA 114 is embodied as an XCF02SVO20C Platform Flash In-System Programmable Configuration PROM, which is commercially available from Xilinx of San Jose, California; an XC2S150E-6FG456C Spartan-IIE 1.8V FPGA, which is also commercially available from Xilinx; a TPS3828-33DBVT Processor Supervisory Circuit, which is commercially available from Texas Instruments Incorporated of Dallas, Texas; and a 74AC04 Hex Inverter, which is commercially available from Fairchild Semiconductor of South Portland, Maine. Additionally, the boot control and configuration FPGA 114 manages the configuration and initialization of the processing circuits 102, 104 and a test pattern and configuration flash programmable read only memory (PROM) device 116, which is coupled therewith. The test pattern and configuration flash PROM device 116 is used to store initialization data that is used by the boot control and configuration FPGA 114 to initialize the processing circuits 102, 104. For example, a variety of test pattern data may be stored in the PROM device 116 for such initialization procedures. In one particular embodiment, the test pattern and configuration flash PROM 116 is embodied as an AM29LV641DH90REI 64-Megabit CMOS 3.0Volt-or Selector Flash Memory with Versatilel Control, which is commercially available from Advanced Micro Devices of Sunnyvale, California.

The boot control and configuration FPGA 114 is also coupled with a PCI interface circuit 116. The PCI interface circuit 116 provides a communication interface for the video processing circuit 100 to a PCI bus 120 of the video monitor 12 such that the video processing circuit 100 is capable of communicating with other electrical devices and circuits. To do so, the PCI interface circuit 118 is also coupled with the processing circuits 102, 104. In one particular embodiment, the PCI interface circuit 118 is embodied as a PCI9056BA 33MHz PCI Controller, which is commercially available from PLX Technology, Incorporated of Sunnyvale, California; and a 93LC56B 2K 2.5 Microwire^{®} Serial EEPROM, which is commercially available from Microchip Technology, Incorporated of Chandler, Arizona.

The processing circuits 102, 104 include a number of function blocks which will now be describe. It should be appreciated, however, that each function block may be embodied as an electrical device, an electrical circuit, a collection of electrical devices or circuits, and/or a software program or data. In one particular embodiment, the processing circuits 102, 104 are each embodied as an XC2VP30-5ff1152C Virtex-II Pro Field Programmable Gate Arrays, which is commercially available from Xilinx of San Jose, California; and two LP3871EMP-2.5 0.8A Fast Ultra Low Dropout Linear Regulators, which are commercially available from National Semiconductor of Santa Clara, California The input processing circuit 102 receives video image data from one or more video cameras coupled with one of four possible BNC connectors 120. Each of the connectors 120 is coupled with a cable equalizer block 122 that is configured to equalize the video image signal before supplying the video image signal to the input processing circuit 102. In one particular embodiment, each of the cable equalizer blocks 122 is embodied as a GS1524-CKD Mult-Rate SDI Dual Slew-Rate Cable Driver, which is commercially available from Gennum Corporation of Burlington, Ontario, Canada. The video image signal is received by the input processing circuit 102 via a number of multi-gigabit transceivers (MGTs) 124 that convert the serial video image signals received via the cable equalizers 122 to a parallel data signal stream. However, the parallel data signal stream may still be encoded according to a video image transmission standard such as a SMPTE standard. Accordingly, the parallel data signal stream is decoded and barrel-shifted to correct bit positions via a number of 4:4:4 decoder blocks 126. The outputs of the decoder blocks 126 are coupled to an input select block 128. The input select block 128 allows a user of the video monitor 12 to select which video input (e.g., which video camera 14) to view. The output of the input select block 128 is coupled to a one dimensional logarithmic-to-linear converter block 130 that converts the video image signal from a logarithmically compressed signal to a linear video image signal. The output of the converter block 130 is coupled with a color space converter block 132 that analyzes the video image signal and ensures that the data contained therein is in the RGB color domain. If not, the converter block 132 converts the erroneous color space data of the video image signal to the RGB color space domain. The output of the color space converter block 132 is coupled with a source select matrix block 134. The source select matrix block 134 allows the user of the video monitor to select a video source from a number of video sources. To do so, a test pattern generator block 136 is coupled with the source select matrix block 134, which is capable of generating a test pattern for display on the video monitor 12. Additionally an image framestore and zoom controller block 138 is coupled with the source select matrix block 134. The controller block 138 is configured to capture, store, and recall video images. The video images are stored in an image framestore memory block 140 coupled therewith. In one particular embodiment, the image framestore memory block 140 is embodied as an M366S1723FTU-C7A SDRAM Unbufferend Module, which is commercially available from Samsung Semiconductor, Incorporated of San Jose, California. The controller block 138 also provides the capability of zooming the video images at predetermined magnification rates. Accordingly, the source select matrix block 134 allows the user of the video monitor 12 to select between the video image received from the video cameras 14 via the BNC connectors 120, a test pattern generated via the test pattern generator block 136, or a previously stored video image and/or a zoomed portion thereof via the controller block 138.

The video source that is selected via the source select matrix block 134 is provided to a primary color correction block 142. The primary color correction block 142 utilizes a 3D look-up random access memory (RAM) block 144 to determine RGB data values based on the video image signal. To do so, a three dimensional look up table is stored in the 3D look-up RAM block 144. In one particular embodiment, the 3D loop-up RAM block 144 may be embodied as an LP2996M DDR Termination Regular, which is commercially available from National Semiconductor of Santa Clara, California; and two K7D803671B-HC25 256Kx36 bit 250MHz SRAMs, which are commercially available from Samsung Semiconductor, Incorporated of San Jose, California. The overall color determination of the video processing circuit 100 may be modified by altering the data stored in the RAM block 144. Additionally, during operating of the video monitor 12 the user may supply additional or alternative RGB data values, which may be used in lieu of the RGB values stored in the 3D look-up RAM block 144. The output from the primary color correction block 142 is supplied to a split screen mixer block 146 that allows the user of the video monitor 12 to view the video image(s) as displayed using the RGB data values stored in the RAM block 144 or (a) the video image(s) as received from the video cameras 14 with no color correction. To do so, the split screen mixer block 146 receives a second video image signal from the source select matrix 134 via a delay block 148. The output of the split screen mixer block 146 and a second video image signal are supplied to the output processing circuit 104 via a pair of MGTs 150. The input processing circuit 102 also supplies user menu data to the output processing circuit 104 via a display controller block 152. The display controller block 152 utilizes a local operator, video status and graticule framestore memory block 154 to implement a number of frame buffers for the various user menus and to store the user menu data. In one particular embodiment, the local operator, video status and graticule framestore memory block 154 may be embodied as four K6R4008V1D-TC08 256Kx16 bit High Speed SRAMs, which are commercially available from Samsung Semiconductor, Incorporated of San Jose, California.

The output processing circuit 104 receives video image signals and other data from the input processing circuit 102, generates waveform display bitmaps based on the signals and data, and converts the video input signals to a progressive-scan output format for display via the display device 54 (e.g., an LCD display screen). To do so, the output processing circuit 104 includes a waveform display and overlay processor block 158 that receives the output video signal from the split screen mixer block 146 of the input processing circuit 102 via an MGT 156. The waveform display and overlay processor block 158 creates four different waveform bitmaps: three YPbPr/RGB line waveforms and a vectorscope display waveform. The waveform display and overlay processor block 158 also receives user menu data from the display controller block 152. The processor block 158 combines the on-screen menu displays based on the menu data with the generated waveform bitmaps. To do so, the waveform display and overlay processor block 158 is coupled with a waveform display memory device block 160 in which is stored waveform bitmap data. In one particular embodiment, the waveform display memory device block 160 is embodied as eight K6R4008V1D-TC08 256Kx16 bit High Speed SRAMs, which are commercially available from Samsung Semiconductor, Incorporated of San Jose, California. The processor block 158 is also coupled with a cursor generator block 162, which is coupled with a cursor RAM block 164, and a safe-title generator block 166. The waveform display and overlay processor block 158 combines user-programmable cursor and safe-title graphics into the waveform bitmaps via the data received from the cursor generator block 162 and the safe-title generator block 166. The waveform display and overlay processor block 158 converts the combined waveform bitmap overlay to RGB values using data retrieved from an overlay color look-up table block 168, which is coupled thereto. The RGB valued waveform overlay is subsequently transmitted to a keyer block 170.

The keyer block 170 keys the RGB valued waveform overlay over the output video source. To do so, the keyer block 170 also receives a video signal from the source select matrix block 134. The output of the keyer block 170 is coupled with an output color corrector block 172 and an RGB-YPbPr color space converter block 174. The color space converter block 174 transforms the video signal received from the keyer block 170 back into the YPbPr color domain for digital video output from the video processing circuit 100 and to, for example, the video device 20. To do so, the output of the color space converter block 174 is coupled to a 4:2:2 encoder block, which outputs a video output signal to a pair of cable driver circuits 178 via a pair of MGTs 180. In one particular embodiment, the cable driver circuits 178 are embodied as GS1524-CKD Mult-Rate SDI Dual Slew-Rate Cable Drivers, which are commercially available from Gennum Corporation of Burlington, Ontario, Canada. Output cables and the like may be coupled to the video processing circuit 100 via a pair of BNC connectors 182.

Referring back the keyer block 170, the color corrector block 172 receives a video output signal from the keyer block 170 and corrects or modifies the video output signal for any non-linearities in the display device 54. To do so, the color corrector block 172 uses a one dimensional RGB look-up table to adjust gamma, color temperature, and/or the like of the video output signal. The video output signal from the color corrector block 172 is provided to a motion compensated de-interlacer block 184. The motion compensated de-interlacer block 184 converts the video output signal from an interlaced video format to a progressive scan format for display on the display device 54. To do so, a motion detector framestore block 186 is coupled with the de-interlacer block 184 and is used by the de-interlacer block 184 in the process of de-interlacing the temporally-separated fields of the video output signal. In one particular embodiment, the motion detector framestore block 186 is embodied as seven K4S641632H-TC60 64Mb H-die SDRAMs Specification 54 TSOP-II with Pb-Free, which are commercially available from Samsung Semiconductor, Incorporated of San Jose, California. The de-interlacer block 184 also utilizes a resample and pull-down framestore block 188 to modify the sample rate of the de-interlaced video signal to match the raster characteristics of the display device 54. The framestore block 188 is also used when video output frames are required to be repeated, which may be required when converting to/for 3:2 pull-down cadence or when the video signal input(s) from the video camera(s) 14 has (have) (a) variable frame-rate(s). In one particular embodiment, the resample and pull-down framestore block 188 is embodied as seven K4S641632H-TC60 64Mb H-die SDRAMs Specification 54 TSOP-II with Pb-Free, which are commercially available from Samsung Semiconductor, Incorporated of San Jose, California. Further, the motion-compensated de-interlacer block 184 adds additional menu displays to the video output signal. For example, a reference test pattern is inserted on a top portion of the display via the use of a reference test pattern block 190. The test pattern may be, for example, a black-to-white ramp that allows a user of the video monitor 12 to assess the display brightness linearity of the display device 54. Additionally, "soft keys" are inserted on the display via the use of a head-up display memory block 192. The "soft keys" are located near the user adjustment controls of the display device 54. In one particular embodiment, the head-up display memory block 192 is embodied as four K6R4008V1D-TC08 256Kx16 bit High Speed SRAMs, which are commercially available from Samsung Semiconductor, Incorporated of San Jose, California. The progressive scan video signal output from the motion compensated de-interlacer block 184 is provided to a low voltage differential signaling (LVDS) output block 194. The output block 194 is a display driver and configures the video output signal to the format accepted by the display device 54. For example, in one particular embodiment, the output block 194 configures the video output signal to a "FPD Link" format that is accepted by typical LCD displays. In one particular embodiment, the LVDS output block 194 is embodied as a DS90C387A Dual Pixel LVDS Display Interface/FPD-Link, which is commercially available from National Semiconductor of Santa Clara, California.

Referring now to FIGS. 4a and 4b, an algorithm 200 may be executed by the video monitor 12 to perform the functions described herein. The algorithm 200, or a portion thereof, may be embodied as a software program or set of instructions that may be stored in the memory device 52 and executed by the processor 50 and/or stored in a memory device of the video processing circuit 56, 100 and executed by, for example, the processing circuits 102, 104. The algorithm 200 begins with process step 202 in which the video monitor 12 is initialized. For example, variables, input/output ports, and communications may be initialized during the process step 202. After the video monitor 12 has been initialized in process step 202, a rental key procedure 204 is executed in some embodiments. The rental key procedure 204 includes a process step 204 in which a rental key is downloaded from a server machine. The rental key may be embodied as a security software routine, authorization code or data, or the like. The rental key may be downloaded, for example, from a server machine coupled with the remote network 36. That is, the video monitor 12 may communicate with the server machine via the communication link 28, the local network 26, the communication link 40 and the remote network 36 to download the rental key. In addition, in some embodiments, the video monitor 12 may transmit identification data that identifies the particular video monitor 12 being used such that the appropriate rental key may be downloaded. Once the rental key has been downloaded in process step 206, the algorithm 200 determines which functions of the video monitor 12 should be available for use by the user of the video monitor 12 based on the rental key in process step 208. That is, the rental key may be used to lock out or restrict certain functions of the video monitor 12 based, for example, on the intended use of the monitor 12, the identity of the user of the monitor 12, and/or on fees associated with available functions. For example, the ability to record or store video images using the video monitor 12 may be restricted based on the downloaded rental key. Once the available functions of the video monitor 12 have been determined in the process step 208, a use timer is initiated in process step 210. The use timer records the length of time that the video monitor 12 is used during the rental period. The use timer may be used, for example, to determine fees payable for the rental of the video monitor 12. Accordingly, the rental key procedure 204 facilitates the rental of video monitors 12 and determination of appropriate rental fees based on time of use and desired functionality.

Once the rental key procedure 204 has been executed, the algorithm 200 advances to process step 212. In process step 212, (a) video image(s) is (are) received from one or more of the video cameras 14 coupled with the video monitor. It should be appreciated that although receiving (a) video image(s) is (are) illustrated as a single process step in the algorithm 200 for clarity, (a) video image(s) may continually be received from the video cameras 14. In process step 214, the algorithm 200 determines if a received video image is in a compressed form. If so, the video image is decompressed in the process step 216. For example, in some embodiments, the video image may be logarithmically compressed. In such embodiments, the video image is decompressed in process step 216 to a linear video image. Once the video image has been decompressed in process step 216, the algorithm 200 advances to process step 218. Referring back to process step 214, if the video image is not in a compressed form, the algorithm 200 skips process step 216 and advances to process step 218.

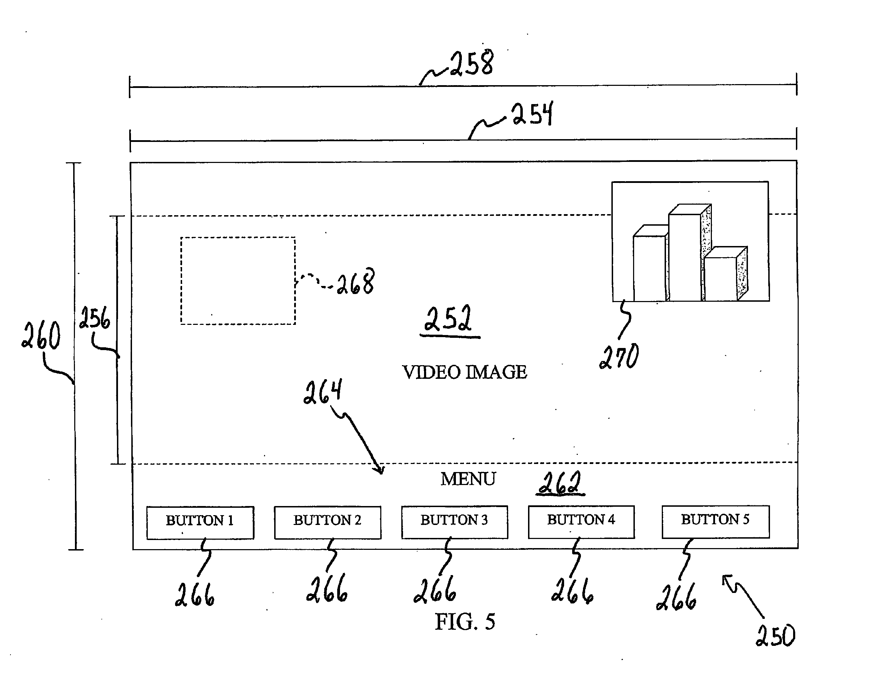

In process step 218, the video image is displayed to the user of the video monitor 12. The video image is displayed on the display device 54 using the current video parameter values and settings of the video image. For example, if the color video parameter of the video image has been modified, the video image will be displayed with a coloring as dictated by the color video parameter. Additionally, the video image is displayed on the display device 54 according to a predetermined display format. As discussed above, the display format(s) have predefined pixel width(s) and height(s). Displaying the video image according to a display format allows the user of the video monitor 12 to view the image as it will be viewed in the selected format. An illustrative display screen 250 of the display device 54 having a video image displayed thereon is shown in FIG. 5. The display screen 250 includes a video image area 252 in which the video image is displayed. The video image area 252 has a pixel width 254 and pixel height 256 corresponding to the predefined pixel width and pixel height, respectively, of the display format used to display the video image. For example, a video image displayed according to a high definition display format will have a pixel width of 1920 pixels and a pixel height of 1080 pixels. Comparatively, the display screen 250 has a pixel width 258 and a pixel height 260. The dimensions of the display screen 250 are designed to be greater than the predefined dimensions of the display format. In the illustrative example, the pixel height 260 of the display screen is greater than the pixel height 256 of the display format and video image area 252. For example, in one particular embodiment, the video image area 252 has a pixel width 254 measuring 1920 pixels and a pixel height 256 measuring 1080 while the display screen has a pixel width 258 measuring 1920 pixels and a pixel height 260 measuring 1200 pixels. Because the area of the display screen 252 is greater than the video image area 252, an unused area 262 exists on the display screen 252. The unused area 262 is used to display a menu(s) 264 having a number of buttons or selections 266 and/or other data to a user of the video monitor 12 such that the menu 264 does not obstruct or otherwise cover any portion of the video image area 252. Accordingly, a user of the video monitor 12 is able to view the entire video image in the video image area 252 while interacting with the video monitor 12 via the menu(s) 264.

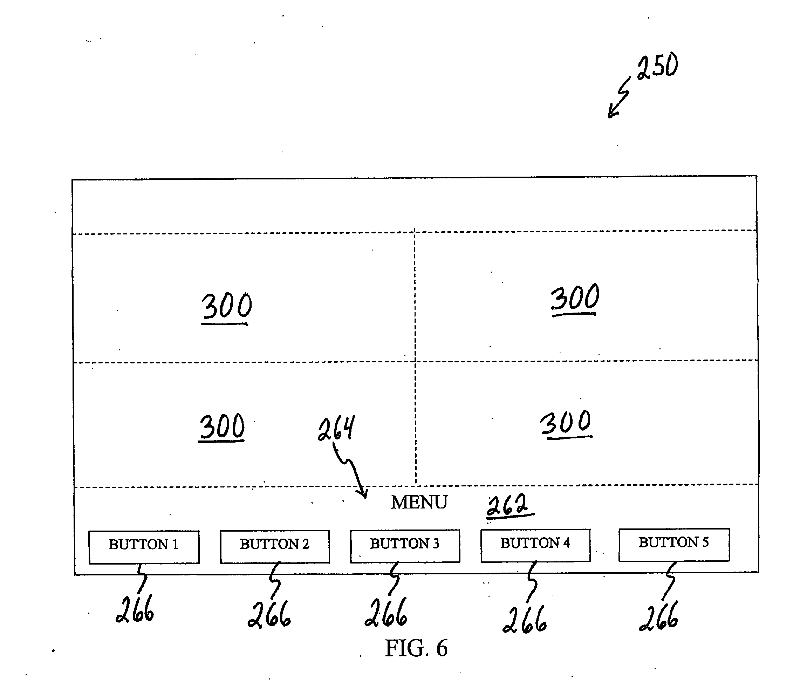

In embodiments wherein more than one camera 14 is used, multiple video images may be displayed on the display screen 250. For example, as illustrated in FIG. 6, in an embodiment including four cameras 14, the display screen 250 may include four separate video image areas 300. The video image(s) received from each camera are separately displayed in the video image areas 300. A user of the video monitor 12 is able to view each video image, analyze the video images, and set up each video camera 14 such that the video image(s) from the camera(s) 14 bear the desired relationships to one another as desired by the user. The adjustment of the video cameras 14 may be done via manual means or, in some embodiments as discussed below in regard to process steps 238 and 240, may be done remotely. The video images from the multiple cameras 14 may be selectively viewed as illustrated in FIG. 6, by selecting an appropriate menu button 266. That is, the viewing of multiple video images or a single video image may be toggled via a button 266 from the appropriate menu 262.

Once the video image has been displayed to the user of the video monitor 12 in process step 218, in some embodiments, the video image is distributed or transmitted to other video devices in process step 220. For example, the video image may be transmitted to video devices 20 via the communication links 22, to the local monitor 24 via the communication links 28, 30 and the local network 26, to the remote communication device 32 via the communication links 28, 34 and the local network, and/or to the remote video monitor 42 via the communication links 28, 40, 44, the local network 28, and the remote network 36. As discussed above, the video image may be transmitted using any suitable transmission protocol and any suitable video image transmission or storage standard. In addition to the video image, the video parameters used to display the video image according to the appearance desired by the user of the video monitor 12 may be transmitted to the other video devices in conjunction with the video image or separately. By transmitting or distributing not only the video image, but also the video parameters, other personnel using the other video devices (i.e., video devices 20, local video monitor 24, remote communication device 32, and/or remote video monitor 42) are able to view the video image as it is viewed by the user of the video monitor 12.

Once the video image has been displayed in process step 218 and optionally transmitted in process step 220, the algorithm 200 determines if the video parameters of the video image are out of the specification of the display format (e.g., of the output medium) in process step 222. That is, for example, the algorithm may determine if the color spectrum values of the video image are greater than the threshold color spectrum values as defined by the display format For example, a particular type of filmstock may have threshold values for the color spectrum of the video image. Color spectrum values greater than these threshold values may result in distorted or unviewable images using the particular type of filmstock. According, the algorithm 200 determines if the current video parameters of the video image fall outside of these threshold values. If it is determined that the video parameters are out of the specified values defined by the display format and/or output medium, an alert is generated in process step 244. The alert may be embodied as a visual, audible, or tactile alert. For example, in some embodiments, a warning sound may be activated and a warning window having information related to the alert may be displayed to a user of the video monitor 12. The user may modify the video parameters as discussed below in response to the alert such that the video parameters fall within the specification of the display format and/or output medium.

Once the alert has been generated in process step 224 or if the algorithm 200 determines that the video parameters are not out of the specification defined by the display format, the algorithm advances to process steps 226, 230, 234, and 238 in which the user may interact with the video monitor 12. As discussed above, the user may interact with the video monitor 12 by selecting one or more buttons 266 via the menu(s) 264 displayed on the display screen 250 of the display device 54. For example, the algorithm 200 determines if the user has requested to adjust any of the video parameter values in process step 226. The user may request such a function by selecting one or more of the menu buttons 266. In response, in some embodiments, the current values of the requested video parameters may be displayed to the user. The user may then alter or modify the video parameter values, which are received by the video monitor 12 in the process step 228. For example, if the user of the video monitor 12 desires to alter or modify the overall color spectrum values of the video image, the user may select an appropriate menu button(s) 266. In response, the video monitor 12 may display to the user, for example in the menu area 270, a graph or other data indicative of the current color spectrum values of the video image. The user may then modify such values so that the video image has the desired appearance and/or meets the specifications of the display format (e.g., of the output medium). Once the video parameters have been viewed and/or modified, the algorithm 200 advances to process step 242, which is discussed in detail below.

In process step 230, the algorithm 200 determines if the user has requested that predefined video parameter values be loaded. If so, the algorithm 200 advances to process step 232 in which the parameter values are retrieved or received from a specified source. The video parameter values may be retrieved from, for example, a data storage device such as the memory device 52, a disk drive coupled with the video monitor 12 (not shown), a flash memory device (not shown), or the like. Additionally, an Application Program Interface (API) may be available such that other software programs and/or devices may interface with the video monitor 12 and/or the algorithm 200 to provide predefined video parameters. Additionally or alternatively, the video parameter values may be retrieved or received from the local video monitor 24 via the communication links 28, 30 and the network 26, from the remote communication device 32 via the communication links 28, 34 and the network 26, and/or from the remote video monitor 42 via the communication links 28, 40, 44 and the networks 26, 36. In this way, personnel other than the user of the video monitor 12 may suggest modifications to the video parameters and transmit them to the video monitor 12 for viewing by the user. The video image will be displayed according to the new video parameters on the next iteration of the process step 218 and 220. Once the video parameters have been retrieved in process step 232, the algorithm 200 advances to process step 242, which is discussed in detail below.

In process step 234, the algorithm 200 determines if the user of the monitor 12 has requested that a dynamic range of a portion of the video image be determined. To do so, as illustrated in FIG. 5, the user may select an appropriate menu button(s) 266 and use a mouse cursor or other device to select a portion 268 of the video image. The portion 268 may have any dimensions. In one illustrative embodiment, the user may select a portion of the video image having a pixel height of up to 100 pixels and a pixel width of up to 100 pixels. Once the portion 268 has been selected, the algorithm 200 determines the dynamic range of the image portion 268 and displays a graph or other data indicative of the determined dynamic range in process step 236. For example, as illustrated in FIG. 5, the algorithm 200 may display a graph 270 to the user that indicates the dynamic range of the portion 268. The dynamic range so determined may include, for example, the color range values for RGB or YPrPb color spectrums or the like. Once the dynamic range of the portion 268 has been determined and displayed to the user in process step 236, the algorithm 200 advances to process step 242, which is discussed in detail below.

In process step 238, the algorithm 200 determines if the user has requested that the cameras 14 be remotely adjusted. To do so, the user of the video monitor 12 may select an appropriate button(s) 266 to control one of several camera adjustments displayed to the user via the display device 54. For example, as illustrated in FIG. 6, a user may view video images received from four video cameras 14 and remotely adjust the cameras by selecting or inputting control data into the video monitor. Camera adjustments, such as camera gain, aperture, gamma, shutter, and other camera adjustments, may be made in this way. Once the camera adjustments have been inputted or selected, the adjustments are transmitted to the individual cameras 14 in process step 240. To do so, control data indicative of the adjustments are transmitted from the video monitor 12 to the cameras 14 via communication links 18. The video images from each video camera 14 using the new adjustments are subsequently displayed to the user upon the next iteration of the process step 218. Once the control data has been transmitted to the cameras 14, the algorithm 200 advances to process step 242.

In process step 242, the algorithm 200 determines if the user has requested to export the video image(s). The user of the video monitor 12 may request that the video image(s) be exported by selecting an appropriate button 266 from the menu 264. In response, the algorithm 200 determines video image data indicative or representative of the video image and embeds video data therein. The video data may include, for example, the current video parameters used to display the video image. As discussed above, the video parameters and other video data may be stored in the ancillary data portions of the video image data. For example, the SMPTE 292M and the SMPTE 372M video standards, which may be used to store the video image(s), define a region of the video image data that may be used to store ancillary data such as the video parameters and other video data. By incorporating the video parameters into the video image data, the user of the video monitor 12 can store the video image(s) in a format for use by a specified or desired display format and/or output medium. For example, the user of the video monitor 12 may adjust or determine video parameters for the video image(s) that are to be used when viewing the image(s) on a LCD display device. Such video parameters are recorded and stored with the video image data and may be extracted by the LCD display device when viewing the video image(s) thereon. Once the video parameters and/or other video data have been incorporated into the video image data, the video image data is exported and stored in process step 246. The video image data may be stored, for example, in a video recording device or the like.

Once the video image(s) have been stored in process step 246 and/or if the user has not requested the storage of the video image, the algorithm 200 loops back to process step 218. In process step 218, the video image is again displayed to the user of the video monitor 12 using the video parameters received in process steps 228 and/or 232. Additionally or alternatively, the video image(s) are displayed in process step 218 using any camera adjustments determined in process step 240. Accordingly, it should be appreciated that a user of the video monitor 12 and/or other personnel using video monitors 24, 42 and/or communication devices 32 may view the video image(s) received from the video cameras 14, modify the video parameters of the video image(s) and/or camera adjustments, and view the resulting video image(s) as displayed using such modified video parameters and/or camera adjustments. In this way, the user and other personnel may remotely collaborate on a video production project and produce a video of video images designed for a specific display format and/or output medium.

While the disclosure has been illustrated and described in detail in the drawings and foregoing description, such illustration and description is to be considered as exemplary and not restrictive in character, it being understood that only illustrative embodiments have been illustrated and described and that all changes and modifications that come within the spirit of the disclosure are desired to be protected.

There are a plurality of advantages of the present disclosure arising from the various features of the system and method described herein. It will be noted that alternative embodiments of the system and method of the present disclosure may not include all of the features described yet still benefit from at least some of the advantages of such features. Those of ordinary skill in the art may readily devise their own implementations of the system and method that incorporate one or more of the features of the present invention and fall within the spirit and scope of the present disclosure as defined by the appended claims.
Various aspects of the invention are now described.
According to an aspect of the present invention there is provided a method for operating a video monitor, the method comprising: receiving a video image from a video source; decompressing the video image; modifying a video parameter of the video image; and displaying the video image based on the video parameter on a display device of the video monitor.
The receiving step may comprise receiving a video image from a video camera.
The receiving step may comprise receiving a Society of Motion Pictures and Television Engineers (SMPTE) standard video image.
The receiving step may comprise receiving a logarithmically compressed video image and the decompressing step comprises decompressing the logarithmically compressed video image to a linear video image.
The modifying step may comprise modifying the color space of the video image.
The displaying step may comprise displaying the video image according to a predetermined display format having a predefined pixel width and pixel height.
The video image may be a high definition video image.
The video image may be a standard definition video image.
The method may further comprise retrieving an authorization code from a remote computer.
The method may further comprise allowing access to a function of the video monitor based on the authorization code.
The method may further comprise recording an amount of time in which the video monitor is used based on the authorization code.
The method may further comprise transmitting the video image to a remote video device.
The transmitting step may comprise transmitting the video image to a video recording device.
The transmitting step may comprise transmitting the video image to a second video monitor.
The transmitting step may comprise transmitting the video image over a network.
The transmitting step may comprise transmitting the video image over a publicly-accessible global network.
The method may further comprise retrieving a predefined video parameter value and the modifying step may comprise modifying the video parameter of the video image based on the predefined video parameter value.
The retrieving step may comprise receiving the predefined video parameter value via a network.
The predefined video parameter value may be based on a predefined display standard.
The method may further comprise determining a color range of a portion of the video image.
The method may further comprise displaying indicia of the color range to a user of the video monitor.
The method may further comprise transmitting control data to the video source based on the video image.
The method may further comprise determining an error condition of the video image and providing an alert based on the determining step.
Determining an error condition may comprise determining if the video image complies with a predefined display standard.
The method may further comprise determining video image data based on the video image and incorporating the video parameter into the video image data.
The method may further comprise storing the video image data.
The method may further comprise displaying a menu of choices on the display device, wherein the menu is displayed on the display device in a location such that the menu does not obstruct any portion of the video image.
According to another aspect of the present invention, there is provided a video monitoring system comprising: a display device; a processor electrically coupled with the display device; and a memory device electrically coupled with the processor, the memory device having stored therein a plurality of instructions, which when executed by the processor, cause the processor to: decompress a video image received from a video source; modify a video parameter of the video image; and display the video image based on the video parameter on the display device.
The video source may comprise a video camera.
The video image may comprise a Society of Motion Pictures and Television Engineers (SMPTE) standard video image.
Decompressing a video image may comprise decompressing a logarithmically compressed video image to a linear video image.
Modifying a video parameter may comprise modifying the color space of the video image.
Displaying the video image may comprise displaying the video image according to a predetermined display format having a predefined pixel width and pixel height.
The video image may comprise a high definition video image.
The video image may comprise a standard definition video image.
The plurality of instructions may further cause the processor to retrieve an authorization code from a remote computer.
The plurality of instructions may further cause the processor to allow access to a function of the video monitoring system based on the authorization code.
The plurality of instructions may further cause the processor to record an amount of time in which the video monitoring system is used based on the authorization code.
The plurality of instructions may further cause the processor to transmit the video image to a remote video device.
The remote video device may be a video recording device.
The remote video device may be a video display device capable of displaying the video image.
Transmitting the video image may comprise transmitting the video image over a network.
The plurality of instructions may further cause the processor to retrieve a predefined video parameter value and modifying a video parameter may comprise modifying the video parameter of the video image based on the predefined video parameter value.
Retrieving a predefined video parameter value may comprise retrieving the predefined video parameter value via a network.
The plurality of instructions may further cause the processor to determine a color range of a portion of the image.
The plurality of instructions may further cause the processor to display indicia of the color range on the display device.
The plurality of instructions may further cause the processor to transmit control data to the video source based on the video image.
The plurality of instructions may further cause the processor to determine an error condition of the video image and provide an alert based on the error condition.
Determining an error condition may comprise determining if the video image complies with a predefined display standard.
The plurality of instructions may further cause the processor to determine video image data based on the video image and incorporate the video parameter into the video image data.
The plurality of instructions may further cause the processor to store the video image data.
The plurality of instructions may further cause the processor to display a menu of choices on the display device. The menu may be displayed on the display device in a location such that the menu does not obstruct any portion of the video image.
According to another aspect of the present invention, there is provided a video monitor comprising: a display screen having a pixel width and a pixel height; a processor electrically coupled with the display screen; and a memory device electrically coupled with the processor, the memory device having stored therein a plurality of instructions, which when executed by the processor, cause the processor to: display a video image received from a video source on the display screen according to a display format, the display format defining having a predefined video image pixel width, and a predefined video image pixel height, the predefined video image pixel height of the display format being less than the pixel height of the display screen; and display a menu of choices on the display screen, the menu being displayed in a location such that the menu does not obstruct any portion of the video image.
According to another aspect of the present invention, there is provided a method of recording a video image, the method comprising displaying the video image according to a predetermined display format; determining a video parameter of the video image; determining video image data indicative of the video image; incorporating the video parameter into the video image data; and storing the video image data.
The video parameter may be associated with a predetermined output medium.

## Claims

1. A video monitor comprising:
a display screen having display screen dimensions defined by a pixel width and a pixel height;
a processor electrically coupled with the display screen; and
a memory device electrically coupled with the processor, the memory device having stored therein a plurality of instructions, which when executed by the processor, cause the processor to:
display a video image received from a video source on the display screen according to a display format, the display format having predefined display format dimensions defined by a predefined video image pixel width, and a predefined video image pixel height, the predefined display format dimensions being less than the predefined display screen dimensions; and
display a menu of choices on the display screen, the menu being displayed in a location such that the menu does not obstruct any portion of the video image.

2. A video monitor according to claim 1, wherein the predefined video image pixel height of the display format is less than the video image pixel height.

3. A video monitor according to claim 1 or 2, wherein the instructions cause the processorto:
display a plurality of video images on the display screen according to the display format.

4. A video monitor according to one of claims 1 to 3, wherein the instructions cause the processor to:
receive a logarithmically compressed video image from a video source and decompress (216) the logarithmically compressed video image to a linear video image; and
wherein displaying a video image comprises displaying said linear video image.

5. A video monitor according to any preceding claim, wherein the plurality of instructions further cause the processor to retrieve an authorization code from a remote computer.

6. A video monitor according to claim 5, wherein the plurality of instructions further cause the processor to allow access to a function of the video monitoring system based on the authorization code.

7. The video monitoring system of claim 5 or 6, wherein the plurality of instructions further cause the processor to record an amount of time in which the video monitoring system is used based on the authorization code.

8. The video monitoring system of any preceding claim, wherein the plurality of instructions further cause the processor to transmit the video image to a remote video device (42).

9. The video monitoring system of any preceding claim, wherein the plurality of instructions further cause the processor to retrieve a predefined video parameter value and to modify a video parameter of the video image based on the predefined video parameter value.

10. The video monitoring system of any preceding claim, wherein the plurality of instructions further cause the processor to determine a colour range of a portion of the video image.

11. The video monitoring system of claim 10, wherein the plurality of instructions further cause the processor to display indicia of the colour range on the display device.

12. The video monitoring system of any preceding claim, wherein the plurality of instructions further cause the processor to transmit control data to the video source based on the video image.

13. The video monitoring system of any preceding claim, wherein the plurality of instructions further cause the processor to determine if the video image complies with a predefined display standard.

14. The video monitoring system, of any preceding claim, wherein the plurality of instructions further cause the processor to modify a video parameter of the video image and to incorporate the modified video parameter into data of the video image.

15. The video monitoring system of any preceding claim, wherein the plurality of instructions further cause the processor to store the video image.
